# EUROPÄISCHE PATENTSCHRIFT

(11) **EP 3 138 996 B1**
(45) Veröffentlichungstag und Bekanntmachung des Hinweises auf die Patenterteilung: **11.12.2019**
(21) Anmeldenummer: 15183987.5
(22) Anmeldetag: 07.09.2015
(51) Int. Cl.: F01D 5/16, F01D 25/06

(54) **TURBOMASCHINENSCHAUFEL**
TURBOMACHINE BLADE
PALE DE TURBOCOMPRESSEUR

(43) Veröffentlichungstag der Anmeldung: 08.03.2017
(73) Patentinhaber: MTU Aero Engines AG, 80995 München (DE)
(72) Erfinder: Hartung, Andreas, 81829 München (DE); Richter, Karl-Hermann, 85229 Markt Indersdorf (DE); Hanrieder, Herbert, 85411 Hohenkammer (DE); Schill, Manfred, 81827 München (DE)

(56) Entgegenhaltungen:
- EP-A1- 3 020 922
- EP-A1- 3 023 584
- DE-A1-102009 010 185
- US-A- 2 349 187
- US-A- 5 232 344

## Beschreibung

Die Arbeiten, die zu dieser Erfindung geführt haben, wurden gemäß der *Finanzhilfevereinbarung* Nr. CSJU-GAM-SAGE-2008-001 im Zuge des Siebten Rahmenprogramms der Europäischen Union (*FP7*/*2007-2013*) für Clean Sky Joint Technology Initiative gefördert.

Die vorliegende Erfindung betrifft eine Schaufel für eine Turbomaschine, insbesondere eine Gasturbine, eine Turbomaschine, insbesondere Gasturbine, und eine Verdichter- oder Turbinenstufe mit der Schaufel sowie ein Verfahren zum Herstellen der Schaufel.

Verschiedene Systeme zur Dämpfung von Schaufelschwingungen sind aus den Dokumenten DE102009010185A1, US2349187A, US5232344A bekannt. Des Weiteren wird auch auf die nachveröffentlichten Dokumente EP3023584A1, EP3020922A1 hingewiesen.

Aus der eigenen WO 2012/095067 A1 ist eine Turbomaschinenschaufel mit Stoß- bzw. Impulskörpern bekannt, die Schwingungsprobleme der Schaufel im Wesentlichen nicht dissipativ durch Reibung, sondern durch Stoßkontakte reduzieren.

Dem liegt - gegenüber bisher üblichen dissipativen Reibdämpfern - ein neuartiges, in der WO 2012/095067 A1 ausführlich erläutertes Konzept zugrunde, durch das Schwingungsmoden der Schaufel gezielt "verstimmt" werden und so Schwingungsprobleme reduziert werden können.

Eine Aufgabe einer Ausführung der vorliegenden Erfindung ist es, eine Turbomaschine zu verbessern.

Diese Aufgabe wird durch eine Schaufel mit den Merkmalen des Anspruchs 1 gelöst. Ansprüche 10 bis 12 stellen eine Gasturbinenverdichter- oder -turbinenstufe bzw. Turbomaschine mit bzw. ein Verfahren zum Herstellen einer hier beschriebenen Schaufel unter Schutz. Vorteilhafte Ausführungsformen der Erfindung sind Gegenstand der Unteransprüche.

Eine erfindungsgemäße Schaufel, insbesondere Laufschaufel, für eine bzw. einer Turbomaschine, insbesondere Gasturbinenverdichter- oder -turbinenstufe, kann insbesondere eine Laufschaufel sein, die an einem um eine (Haupt)Rotations- bzw. Maschinenachse der Turbomaschine bzw. Stufe drehbar(gelagert)en Rotor angeordnet, insbesondere lösbar, insbesondere reib- und/oder formschlüssig, oder unlösbar, insbesondere stoff-, reib- und/oder formschlüssig, mit dem Rotor verbunden oder integral mit diesem ausgebildet ist bzw. wird. Fliehkraftbedingt können hier Impulskörper besonders vorteilhaft wirken.

Gleichermaßen kann eine erfindungsgemäße Schaufel auch eine gehäusefeste Leitschaufel der Turbomaschine sein. Überraschenderweise können auch hier durch Impulskörper vorteilhaft Schwingungsprobleme reduziert werden.

Die Turbomaschine ist in einer Ausführung eine Gasturbine, insbesondere eines Flugtriebwerks. Die Schaufel kann insbesondere in einer Verdichter- oder einer Turbinenstufe der Gasturbine angeordnet bzw. verwendet werden bzw. sein. Hier wirken Impulskörper besonders vorteilhaft.

Nach einem Aspekt der vorliegenden Erfindung weist die Schaufel eine oder mehrere Matrizen mit (jeweils):
- einer ersten Stoßkammer, in der genau ein oder mehrere Impulskörper mit Bewegungsspiel angeordnet sind bzw. werden,
- eine oder mehrere zweite Stoßkammern, deren Volumenmittel- bzw. geometrische Schwerpunkte (jeweils) gegenüber einem Volumenmittel- bzw. geometrischen Schwerpunkt der ersten Stoßkammer entlang bzw. (nur) längs einer ersten Matrixachse versetzt bzw. -schoben sind und in denen (jeweils) genau ein oder mehrere Impulskörper mit Bewegungsspiel angeordnet sind bzw. werden, und
- eine oder mehrere dritte Stoßkammern auf, deren Volumenmittel- bzw. geometrische Schwerpunkte (jeweils) gegenüber dem Volumenmittel- bzw. geometrischen Schwerpunkt der ersten Stoßkammer entlang bzw. (nur) längs einer zweiten Matrixachse quer zu der ersten Matrixachse versetzt bzw. -schoben sind und in denen (jeweils) genau ein oder mehrere Impulskörper mit Bewegungsspiel angeordnet sind bzw. werden.

Durch die Anordnung eines einzelnen Impulskörpers in einer Stoßkammer kann eine besonders vorteilhafte Stoßdynamik realisiert werden.

Ein oder mehrere Impulskörper können insbesondere, wenigstens im Wesentlichen, kugelförmig sein. Hierdurch kann eine besonders vorteilhafte Stoßdynamik realisiert werden. Gleichermaßen können ein oder mehrere Impulskörper in einer Ausführung, wenigstens im Wesentlichen, scheibenförmig, insbesondere zylinderförmig, sein. Hierdurch kann insbesondere vorteilhaft eine Vorzugsstoßrichtung vorgegeben werden.

Erfindungsgemäß weisen ein oder mehrere Impulskörper jeweils eine Masse von wenigstens 0,01 g und/oder höchstens 0,075 g auf. Hierdurch kann eine besonders vorteilhafte Stoßdynamik realisiert werden.

Zusätzlich oder alternativ beträgt das Bewegungsspiel in einer oder mehreren Stoßkammern in einer oder mehreren Richtungen (jeweils) wenigstens 10 µm, insbesondere wenigstens 0,05 mm, insbesondere wenigstens 0,5 mm, und/oder höchstens 1,5 mm, insbesondere höchstens 1,2 mm, insbesondere höchstens 0,8 mm. Hierdurch kann eine besonders vorteilhafte Stoßdynamik realisiert werden.

In einer Ausführung sind bzw. werden einer oder mehrere Stoßkammern mit Gas, insbesondere Luft, gefüllt und/oder gas-, insbesondere luftdicht verschlossen. Hierdurch kann eine besonders vorteilhafte Stoßdynamik realisiert werden.

Nach einem Aspekt der vorliegenden Erfindung schließt (im eingebauten bzw. in der Turbomaschine bzw. Stufe angeordneten Zustand der Schaufel) die erste Matrixachse mit der (Haupt)Rotations- bzw. Maschinenachse der Turbomaschine bzw. Stufe einen Winkel von wenigstens 60°, insbesondere wenigstens 70°, insbesondere wenigstens 80°, und höchstens 120°, insbesondere höchstens 110°, insbesondere höchstens 100°, ein.

Mit anderen Worten sind nach diesem Aspekt die erste, zweite(n) und dritte(n) Stoßkammer(n) wenigstens einer Matrix in einer durch die erste und zweite Matrixachse aufgespannten bzw. definierten Ebene angeordnet, deren erste Matrixachse, entlang der wenigstens die erste und zweite Stoßkammer(n) angeordnet sind, näherungsweise, insbesondere wenigstens im Wesentlichen, senkrecht zur Rotationsachse der Turbomaschine bzw. Stufe (orientiert) ist, wenn die Schaufel in der Turbomaschine angeordnet ist.

Es hat sich überraschend herausgestellt, dass durch eine solche Ausrichtung einer Matrix von Stoßkammern eine besonders vorteilhafte Stoßdynamik realisiert werden kann, insbesondere fliehkraftbedingt bei Laufschaufeln, bei denen die erste Matrixachse somit näherungsweise, insbesondere wenigstens im Wesentlichen, parallel zum Fliehkraftfeld ausgerichtet bzw. orientiert ist.

In einer Ausführung schließt die zweite Matrixachse mit der Rotationsachse der Turbomaschine bzw. Stufe einen Winkel von wenigstens 0° und höchstens 30° ein. Mit anderen Worten ist in einer Ausführung die durch die erste und zweite Matrixachse aufgespannte bzw. definierte Ebene näherungsweise, insbesondere wenigstens im Wesentlichen, parallel zur Rotationsachse der Turbomaschine bzw. Stufe (orientiert), wenn die Schaufel in der Turbomaschine angeordnet ist.

Es hat sich überraschend herausgestellt, dass durch eine solche Ausrichtung wenigstens einer Matrix von Stoßkammern eine besonders vorteilhafte Stoßdynamik realisiert werden kann, insbesondere fliehkraftbedingt bei Laufschaufeln, bei denen die erste Matrixachse somit näherungsweise, insbesondere wenigstens im Wesentlichen, parallel zum Fliehkraftfeld ausgerichtet bzw. orientiert ist.

In einer Ausführung schließen die erste und zweite Matrixachse miteinander einen Winkel von wenigstens 30°, insbesondere wenigstens 60°, insbesondere wenigstens 80°, und höchstens 90° ein.

Es hat sich herausgestellt, dass durch eine solche Anordnung der Stoßkammern innerhalb der Matrix eine besonders vorteilhafte Stoßdynamik realisiert werden kann.

In einer Ausführung weist wenigstens einer der Matrizen eine oder mehrere vierte Stoßkammern auf, in denen (jeweils) genau ein oder mehrere Impulskörper mit Bewegungsspiel angeordnet sind bzw. werden, und deren Volumenmittel- bzw. geometrische Schwerpunkte (jeweils) von einer durch die erste und zweite Matrixachse aufgespannten Ebene um höchstens 75%, insbesondere höchstens 50%, insbesondere höchstens 25%, einer maximalen Erstreckung der (jeweiligen) vierten Stoßkammer, insbesondere des (größten) in ihr angeordneten Impulskörpers, beabstandet ist. Mit anderen Worten weist die Matrix in der Ausführung mehr als drei Stoßkammern auf, die alle näherungsweise, insbesondere wenigstens im Wesentlichen, in einer (durch die erste und zweite Matrixachse aufgespannten) Ebene angeordnet sind.

Durch die Anordnung weiterer Stoßkammern näherungsweise, insbesondere wenigstens im Wesentlichen, in der Matrixebene kann eine besonders vorteilhafte Stoßdynamik realisiert werden.

In einer Ausführung schließt bei einer oder mehreren, insbesondere allen, vierten Stoßkammern wenigstens einer Matrix (jeweils) eine erste Verbindungsgerade des Volumenmittelpunkts der vierten Stoßkammer mit dem Volumenmittelpunkt einer weiteren der Stoßkammern, insbesondere einer dritten oder weiteren vierten Stoßkammer, mit der ersten Matrixachse einen Winkel von höchstens 10° ein und eine zweite Verbindungsgerade des Volumenmittelpunkts dieser vierten Stoßkammer mit dem Volumenmittelpunkt einer anderen der Stoßkammern, insbesondere einer zweiten oder anderen vierten Stoßkammer, mit der zweiten Matrixachse einen Winkel von höchstens 10° ein. Mit anderen Worten kann in einer Ausführung die Matrix bzw. Anordnung der Stoßkammern näherungsweise, insbesondere wenigstens im Wesentlichen, schachbrettartig sein.

Es hat sich herausgestellt, dass durch eine solche Anordnung der Stoßkammern innerhalb der Matrix eine besonders vorteilhafte Stoßdynamik realisiert werden kann.

In einer Ausführung sind bzw. werden die Volumenmittelpunkte von einem oder mehreren, insbesondere allen, Paaren der Stoßkammern (jeweils) um wenigstens 110%, insbesondere wenigstens 150%, und/oder höchstens 400%, insbesondere höchstens 200%, einer maximalen Erstreckung der Impulskörper der beiden Stoßkammern beabstandet. Weisen die Impulskörper der beiden Stoßkammern eines Paares unterschiedliche maximale Erstreckungen auf, so ist die maximale Erstreckung der Impulskörper der beiden Stoßkammern im Sinne der vorliegenden Erfindung die größte dieser maximalen Erstreckungen, bei gleich großen maximalen Erstreckungen diese (gleiche) maximale Erstreckung.

Enthalten beispielsweise gleiche zylinderförmige Stoßkammern mit einem Radius R und einer Höhe H > 2R jeweils einen einzigen kugelförmigen Impulskörper mit Radius r < R, so sind in einer Ausführung die Volumenmittelpunkte der beiden Stoßkammern um wenigstens 2,2r und/oder höchstens 8r voneinander beabstandet.

Es hat sich herausgestellt, dass durch eine solche Beabstandung von Stoßkammern innerhalb der Matrix eine besonders vorteilhafte Stoßdynamik realisiert werden kann.

Erfindungsgemäß wird bzw. ist wenigstens eine der hier beschriebenen Matrizen auf einer schaufelblattabgewandten Seite eines Deckbandes eines schaufel(blatt)fußseitig angeordneten bzw. Innendeckbands der Schaufel angeordnet.

Durch eine Anordnung unterhalb eines Innendeckbands können vorteilhaft hier zur Verfügung stehender Raum genutzt und bestimmte, insbesondere im Betrieb häufig angeregte Schwingungsformen bzw. -frequenzen besonders wirkungsvoll verstimmt werden.

In einer Ausführung weist die Schaufel einen mit einem Schaufelblatt ausgebildeten oder verbundenen Grundkörper, insbesondere Schaufelfuß, auf.

Das Schaufelblatt ist in einer Ausführung zur Umlenkung einer Arbeitsströmung der Turbomaschine bzw. Stufe vorgesehen bzw. eingerichtet und weist hierzu in einer Ausführung eine, insbesondere konvexe, Saugseite und eine, insbesondere konkave, Druckseite auf.

Es ist bzw. wird in einer Ausführung, insbesondere integral, mit dem Grundkörper ausgebildet, insbesondere urgeformt, oder, insbesondere stoff-, reib- und/oder formschlüssig, mit dem Grundkörper verbunden, insbesondere verschweißt.

Erfindungsgemäß sind alle Stoßkammern wenigstens einer Matrix in einer saug- oder druckseitigen Hälfte der Schaufel angeordnet.

Erfindungsgemäß sind wenigstens 75% der Stoßkammern, insbesondere alle Stoßkammern, wenigstens einer Matrix in bzw. auf einer saugseitigen Hälfte der Schaufel angeordnet. Hierdurch können vorteilhaft insbesondere durch Abströmungen angeregte Schwingungen reduziert werden.

Zusätzlich oder alternativ werden bzw. sind in einer Ausführung wenigstens 75% der Stoßkammern, insbesondere alle Stoßkammern, wenigstens einer Matrix in bzw. auf einer druckseitigen Hälfte der Schaufel angeordnet. Hierdurch können vorteilhaft insbesondere durch Anströmungen angeregte Schwingungen reduziert werden.

In einer Ausführung werden bzw. sind eine oder mehrere, insbesondere alle, Stoßkammern wenigstens einer Matrix in dem bzw. durch den Grundkörper der Schaufel ausgebildet, insbesondere in diesem urgeformt oder spanend hergestellt. Hierdurch kann vorteilhaft eine besonders kompakte Anordnung realisiert werden.

Zusätzlich oder alternativ werden bzw. sind in einer Ausführung eine oder mehrere, insbesondere alle, Stoßkammern wenigstens einer Matrix in einem Gehäuse ausgebildet, insbesondere urgeformt oder spanend hergestellt, welches separat von dem Grundkörper hergestellt und, insbesondere stoffschlüssig, insbesondere durch Schweißen, mit diesem verbunden wird bzw. ist. Hierdurch kann eine besonders vorteilhafte Stoßdynamik realisiert werden.

In einer Ausführung werden bzw. sind eine oder mehrere, insbesondere alle, Stoßkammern wenigstens einer Matrix nach dem Einfüllen der Impulskörper durch einen, insbesondere stoffschlüssig, insbesondere durch Schweißen, verbundenen, Deckel verschlossen. Der Deckel und/oder das separate Gehäuse kann hierzu vorteilhafterweise aus einer Nickel-Chrom-Molybdän-Legierung, insbesondere Haynes 230 oder HastelloyX, hergestellt sein bzw. werden. Hierdurch kann in einer Ausführung vorteilhaft eine Beeinflussung der Stoßdynamik durch Arbeitsfluid der Turbomaschine reduziert werden.

Zum Herstellen einer hier beschriebenen Schaufel werden nach einem Aspekt der vorliegenden Erfindung die Stoßkammern ausgebildet, die Impulskörper eingeführt, und die Stoßkammern verschlossen. In einer Weiterbildung werden zunächst die in dem Gehäuse ausgebildeten Stoßkammern durch den Deckel verschlossen und anschließend das Gehäuse mit dem Grundkörper verbunden. Hierdurch kann vorteilhaft die Stoßdynamik der Impulskörper vorab geprüft werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine Matrix einer Schaufel einer Verdichter- oder Turbinenstufe einer Gasturbine nach einer Ausführung der vorliegenden Erfindung;
- Fig. 2: eine perspektivische Ansicht eines Teiles einer Schaufel einer Verdichter- oder Turbinenstufe einer Gasturbine nach einer Ausführung der vorliegenden Erfindung;
- Fig. 3: einen Schnitt längs der Linie III-III in Fig. 2;
- Fig. 4: einen Schnitt längs der Linie IV-IV in Fig. 2;
- Fig. 5: eine perspektivische Ansicht eines Teiles einer Schaufel einer Verdichter- oder Turbinenstufe einer Gasturbine nach einer weiteren Ausführung der vorliegenden Erfindung;
- Fig. 6: einen Schnitt längs der Linie VI-VI in Fig. 5;
- Fig. 7: einen Schnitt längs der Linie VII-VII in Fig. 5;
- Fig. 8: einen Fig. 3, 6 entsprechenden Schnitt einer Schaufel einer Verdichter- oder Turbinenstufe einer Gasturbine nach einer weiteren Ausführung der vorliegenden Erfindung; und
- Fig. 9: einen Fig. 4, 7 entsprechenden Schnitt der Schaufel der Fig. 8.

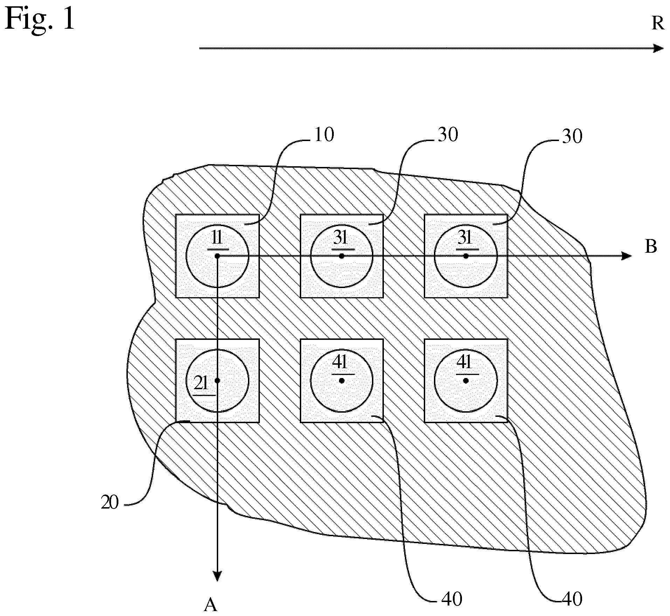

Fig. 1 zeigt teilweise schematisiert eine Matrix einer Schaufel einer Verdichter- oder Turbinenstufe einer Gasturbine nach einer Ausführung der vorliegenden Erfindung.

Die Matrix weist eine erste Stoßkammer 10, in der ein kugelförmiger Impulskörper 11 mit Bewegungsspiel angeordnet ist, eine zweite Stoßkammer 20, deren Volumenmittel- bzw. geometrische Schwerpunkte gegenüber dem Volumenmittel- bzw. geometrischen Schwerpunkt der ersten Stoßkammer 10 entlang einer ersten Matrixachse A versetzt ist und in dem ein kugelförmiger Impulskörper 21 mit Bewegungsspiel angeordnet ist, und zwei dritte Stoßkammern 30 auf, deren Volumenmittel- bzw. geometrische Schwerpunkte jeweils gegenüber dem Volumenmittel- bzw. geometrischen Schwerpunkt der ersten Stoßkammer 10 entlang einer zweiten Matrixachse B quer zu der ersten Matrixachse A versetzt sind und in denen jeweils ein kugelförmiger Impulskörper 31 mit Bewegungsspiel angeordnet ist. Die Volumenmittel- bzw. geometrischen Schwerpunkte sind jeweils durch ausgefüllte Kreise angedeutet.

Im eingebauten bzw. in der Stufe angeordneten Zustand schließt die erste Matrixachse A mit der (Haupt)Rotations- bzw. Maschinenachse R der Stufe einen Winkel von etwa 90° ein.

Die zweite Matrixachse B schließt im exemplarischen Ausführungsbeispiel mit der Rotationsachse R der Stufe einen Winkel von etwa 0° ein.

Die erste und zweite Matrixachse A, B schließen miteinander einen Winkel von etwa 90° ein.

Die Matrix weist exemplarisch zwei vierte Stoßkammern 40 auf, in denen jeweils ein kugelförmiger Impulskörper 41 mit Bewegungsspiel angeordnet ist, und deren Volumenmittel- bzw. geometrische Schwerpunkte jeweils in der durch die erste und zweite Matrixachse A, B aufgespannten Ebene, d.h. der Zeichenebene der Fig. 1, liegen.

Bei den vierten Stoßkammern 40 schließt jeweils eine erste Verbindungsgerade des Volumenmittelpunkts der jeweiligen vierten Stoßkammer 40 mit dem Volumenmittelpunkt einer der dritten Stoßkammern 30 (vertikal in Fig. 1) mit der ersten Matrixachse A einen Winkel von etwa 0° ein und eine zweite Verbindungsgerade des Volumenmittelpunkts dieser vierten Stoßkammer mit dem Volumenmittelpunkt der zweiten Stoßkammer 20 (horizontal in Fig. 1) mit der zweiten Matrixachse B einen Winkel von etwa 0° ein, so dass die Stoßkammern 10, 20, 30 und 40 schachbrettartig angeordnet sind.

Die Volumenmittelpunkte von allen Paaren der Stoßkammern 10, 20, 30 und 40 sind jeweils um wenigstens 110% und höchstens 400% des Durchmessers der gleichartigen Impulskörper 11, 21, 31 und 41 beabstandet.

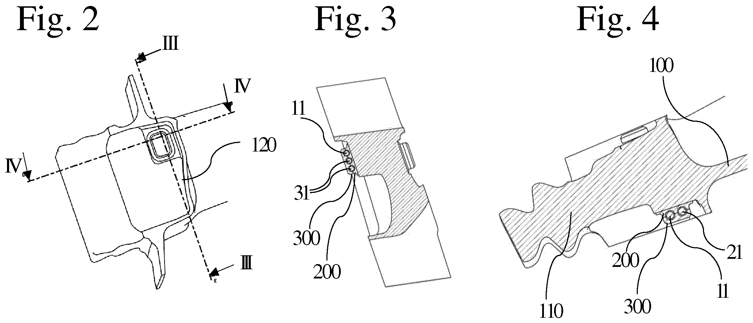

Fig. 2-4 zeigen einen Teil einer Schaufel einer Verdichter- oder Turbinenstufe einer Gasturbine nach einer Ausführung der vorliegenden Erfindung in perspektivischer Ansicht (Fig. 2) bzw. Schnitten längs der Linien III-III (Fig. 3) bzw. IV-IV (Fig. 4). Der Ausführung der Fig. 1 entsprechende Merkmale sind durch identische Bezugszeichen gekennzeichnet, so dass auf deren Beschreibung Bezug genommen wird.

Dabei entspricht die Schnittlinie IV-IV der ersten Matrixachse A, die auf der Rotationsachse senkrecht steht, der Schnittlinie III-III der zweiten Matrixachse B, die mit der Rotationsachse einen Winkel von etwa 20° einschließt.

Die Schaufel weist einen mit einem Schaufelblatt 100 ausgebildeten Schaufelfuß 110 auf.

Die Matrix ist auf einer schaufelblattabgewandten Seite (links in Fig. 2) eines schaufelblattfußseitig angeordneten bzw. Innendeckbands 120 der Schaufel angeordnet.

Die Stoßkammern sind in einem Gehäuse 200 ausgebildet, insbesondere urgeformt oder spanend hergestellt, welches separat von dem Schaufelfuß 110 hergestellt und durch Schweißen mit diesem verbunden wird bzw. ist. Zuvor wird es durch einen Deckel 300 verschlossen bzw. ist es durch einen Deckel 300 verschlossen worden.

In der Ausführung der Fig. 2-4 sind die Stoßkammern der Matrix in bzw. auf einer druckseitigen Hälfte der Schaufel (oben in Fig. 2) angeordnet.

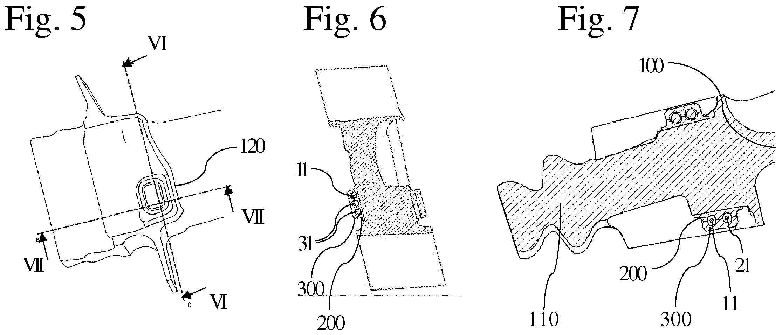

Fig. 5-7 zeigen in Fig. 2-4 entsprechender Weise einen Teil einer Schaufel einer Verdichter- oder Turbinenstufe einer Gasturbine nach einer weiteren Ausführung der vorliegenden Erfindung in perspektivischer Ansicht (Fig. 5) bzw. Schnitten längs der Linien VI-VI (Fig. 6) bzw. VII-VII (Fig. 7). Den Ausführungen der Fig. 1-4 entsprechende Merkmale sind wieder durch identische Bezugszeichen gekennzeichnet, so dass auf deren Beschreibung Bezug genommen und nachfolgend nur auf Unterschiede eingegangen wird.

In der Ausführung der Fig. 5-7 sind die Stoßkammern der Matrix in bzw. auf einer saugseitigen Hälfte der Schaufel (unten in Fig. 5) angeordnet.

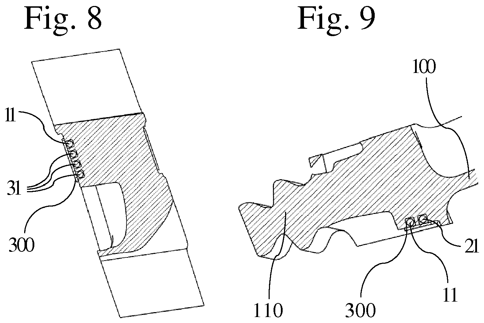

Fig. 8, 9 zeigen in Fig. 3, 4 bzw. 6, 7 entsprechender Weise einen Teil einer Schaufel einer Verdichter- oder Turbinenstufe einer Gasturbine nach einer weiteren Ausführung der vorliegenden Erfindung in Schnitten. Den Ausführungen der Fig. 1-7 entsprechende Merkmale sind wieder durch identische Bezugszeichen gekennzeichnet, so dass auf deren Beschreibung Bezug genommen und nachfolgend nur auf Unterschiede eingegangen wird.

In der Ausführung der Fig. 8, 9 sind die Stoßkammern in dem Schaufelfuß 110 der Schaufel ausgebildet, insbesondere in diesem urgeformt oder spanend hergestellt. Zudem sind hier exemplarisch drei dritte Stoßkammern bzw. Impulskörper vorgesehen.

Obwohl in den Fig. 2-9 nicht erkennbar, sind auch hier analog zur Ausführung der Fig. 1 vierte Stoßkammern mit Impulskörpern vorgesehen, die schachbrettartig in der Ebene der Matrix angeordnet sind.

Obwohl in der vorhergehenden Beschreibung exemplarische Ausführungen erläutert wurden, sei darauf hingewiesen, dass eine Vielzahl von Abwandlungen möglich ist. Außerdem sei daraufhingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: erste Stoßkammer
- 11: Impulskörper
- 20: zweite Stoßkammer
- 21: Impulskörper
- 30: dritte Stoßkammer
- 31: Impulskörper
- 40: vierte Stoßkammer
- 41: Impulskörper
- 100: Schaufelblatt
- 110: Schaufelfuß
- 120: Innendeckband
- 200: Gehäuse
- 300: Deckel

- A: erste Matrixachse
- B: zweite Matrixachse
- R: Rotationsachse

## Patentansprüche

1. Schaufel für eine Turbomaschine, insbesondere eine Verdichter- oder Turbinenstufe einer Gasturbine, mit wenigstens einer Matrix mit
einer ersten Stoßkammer (10), in der wenigstens ein Impulskörper (11) mit Bewegungsspiel angeordnet ist,
wenigstens einer zweiten Stoßkammer (20), deren Volumenmittelpunkt gegenüber einem Volumenmittelpunkt der ersten Stoßkammer (10) entlang einer ersten Matrixachse (A) versetzt ist und in der wenigstens ein Impulskörper (21) mit Bewegungsspiel angeordnet ist, und
wenigstens einer dritten Stoßkammer (30), deren Volumenmittelpunkt gegenüber dem Volumenmittelpunkt der ersten Stoßkammer (10) entlang einer zweiten Matrixachse (B) quer zu der ersten Matrixachse (A) versetzt ist und in der wenigstens ein Impulskörper (31) mit Bewegungsspiel angeordnet ist,
wobei die erste Matrixachse (A) mit einer Rotationsachse (R) der Turbomaschine einen Winkel von wenigstens 60° und höchstens 120° einschließt, wobei wenigstens 75% der Stoßkammern in einer saugseitigen Hälfte der Schaufel oder wenigstens 75% der Stoßkammern in einer druckseitigen Hälfte der Schaufel angeordnet sind und **dadurch gekennzeichnet dass** wenigstens ein Impulskörper eine Masse von wenigstens 0,01 g und/oder höchstens 0,075 g aufweist und/oder das Bewegungsspiel in wenigstens einer Stoßkammern in wenigstens einer Richtung wenigstens 10 µm und/oder höchstens 1,5 mm beträgt.

2. Schaufel nach dem vorhergehenden Anspruch, **dadurch gekennzeichnet, dass** die zweite Matrixachse (B) mit der Rotationsachse (R) der Turbomaschine einen Winkel von wenigstens 0° und höchstens 30° und/oder mit der ersten Matrixachse (A) einen Winkel von wenigstens 30° und höchstens 90° einschließt.

3. Schaufel nach einem der vorhergehenden Ansprüche, **gekennzeichnet durch** wenigstens eine vierte Stoßkammer (40), deren Volumenmittelpunkt von einer durch die erste und zweite Matrixachse (A, B) aufgespannten Ebene um höchstens 75% einer maximalen Erstreckung der vierten Stoßkammer (40) beabstandet ist und in der wenigstens ein Impulskörper (41) mit Bewegungsspiel angeordnet ist.

4. Schaufel nach dem vorhergehenden Anspruch, **dadurch gekennzeichnet, dass** eine erste Verbindungsgerade des Volumenmittelpunkts wenigstens einer vierten Stoßkammer (40) mit dem Volumenmittelpunkt einer weiteren der Stoßkammern (10, 20, 30, 40) mit der ersten Matrixachse (A) einen Winkel von höchstens 10° einschließt und eine zweite Verbindungsgerade des Volumenmittelpunkts dieser vierten Stoßkammer (40) mit dem Volumenmittelpunkt einer anderen der Stoßkammern (10, 20, 30, 40) mit der zweiten Matrixachse (B) einen Winkel von höchstens 10° einschließt.

5. Schaufel nach einem der vorhergehenden Ansprüche, **dadurch gekennzeichnet, dass** die Volumenmittelpunkte von wenigstens einem Paar der Stoßkammern (10, 20, 30, 40) um wenigstens 110% und/oder höchstens 400% einer maximalen Erstreckung der Impulskörper (11, 21, 31, 41) der beiden Stoßkammern beabstandet sind.

6. Schaufel nach einem der vorhergehenden Ansprüche, **dadurch gekennzeichnet, dass** die Matrix auf einer schaufelblattabgewandten Seite eines Deckbandes (120) der Schaufel angeordnet ist.

7. Schaufel nach einem der vorhergehenden Ansprüche, **dadurch gekennzeichnet, dass** wenigstens eine der Stoßkammern in einem mit einem Schaufelblatt (100) ausgebildeten oder verbundenen Grundkörper (110) der Schaufel ausgebildet ist.

8. Schaufel nach einem der vorhergehenden Ansprüche, **dadurch gekennzeichnet, dass** wenigstens eine der Stoßkammern in einem Gehäuse (200) ausgebildet ist, welches, insbesondere stoffschlüssig, mit einem mit einem Schaufelblatt (100) ausgebildeten oder verbundenen Grundkörper (110) der Schaufel verbunden ist.

9. Schaufel nach einem der vorhergehenden Ansprüche, **dadurch gekennzeichnet, dass** wenigstens eine der Stoßkammern durch einen, insbesondere stoffschlüssig verbundenen, Deckel (300) verschlossen ist.

10. Verdichter- oder Turbinenstufe für eine Gasturbine mit wenigstens einer Schaufel nach einem der vorhergehenden Ansprüche.

11. Turbomaschine, insbesondere Gasturbine, mit wenigstens einer Schaufel nach einem der vorhergehenden Ansprüche.

12. Verfahren zum Herstellen einer Schaufel nach einem der vorhergehenden Ansprüche, mit den Schritten: Ausbilden der Stoßkammern (10, 20, 30, 40), Einführen der Impulskörper (11, 21, 31, 41), und Verschließen der Stoßkammern (10, 20, 30, 40).

## Claims

1. Blade for a turbomachine, in particular a compressor stage or turbine stage of a gas turbine, having at least one matrix which has a first impact chamber (10) in which at least one impulse body (11) is arranged with play of movement, at least one second impact chamber (20), the center of volume of which is offset along a first matrix axis (A) with respect to a center of volume of the first impact chamber (10) and in which at least one impulse body (21) is arranged with play of movement, and at least one third impact chamber (30), the center of volume of which is offset along a second matrix axis (B) that is transverse to the first matrix axis (A) with respect to the center of volume of the first impact chamber (10) and in which the at least one impulse body (31) is arranged with play of movement, the first matrix axis (A) enclosing an angle of at least 60° and at most 120° with an axis of rotation (R) of the turbomachine, at least 75% of the impact chambers being arranged in a suction-side half of the blade or at least 75% of the impact chambers being arranged in a pressure-side half of the blade and **characterized in that** at least one impulse body has a mass of at least 0.01 g and/or at most 0.075 g and/or the play of movement in at least one impact chamber is at least 10 µm and/or at most 1.5 mm in at least one direction.

2. Blade according to the preceding claim, **characterized in that** the second matrix axis (B) encloses an angle of at least 0° and at most 30° with the rotation axis (R) of the turbomachine and/or encloses an angle of at least 30° and at most 90° with the first matrix axis (A).

3. Blade according to any of the preceding claims, **characterized by** at least one fourth impact chamber (40), the center of volume of which is spaced apart from a plane that is defined by the first and second matrix axes (A, B) by at most 75% of a maximum extension of the fourth impact chamber (40), and in which at least one impulse body (41) is arranged with play of movement.

4. Blade according to the preceding claim, **characterized in that** a first connecting straight line of the center of volume of at least one fourth impact chamber (40) and the center of volume of another of the impact chambers (10, 20, 30, 40) encloses an angle of at most 10° with the first matrix axis (A), and a second connecting straight line of the center of volume of said fourth impact chamber (40) and the center of volume of another of the impact chambers (10, 20, 30, 40) encloses an angle of at most 10° with the second matrix axis (B).

5. Blade according to any of the preceding claims, **characterized in that** the centers of volume of at least one pair of impact chambers (10, 20, 30, 40) are spaced apart by at least 110% and/or at most 400% of a maximum extension of the impulse body (11, 21, 31, 41) of the two impact chambers.

6. Blade according to any of the preceding claims, **characterized in that** the matrix is arranged on a side of a shroud (120) of the blade that faces away from an airfoil.

7. Blade according to any of the preceding claims, **characterized in that** at least one of the impact chambers is formed in a main part (110) of the blade, which body is formed together with or connected to an airfoil (100).

8. Blade according to any of the preceding claims, **characterized in that** at least one of the impact chambers is formed in a housing (200) which is connected, in particular integrally, to a main part (110) which is formed together with or connected to an airfoil (100).

9. Blade according to any of the preceding claims, **characterized in that** at least one of the impact chambers is closed by a cover (300), in particular an integrally connected cover.

10. Compressor stage or turbine stage of a gas turbine having at least one blade according to any of the preceding claims.

11. Turbomachine, in particular a gas turbine, having at least one blade according to any of the preceding claims.

12. Method for producing a blade according to any of the preceding claims, comprising the following steps: forming the impact chambers (10, 20, 30, 40); inserting the impulse bodies (11, 21, 31, 41); and closing the impact chambers (10, 20, 30, 40).

## Revendications

1. Pale de turbocompresseur, en particulier d'un étage de compresseur ou de turbine d'une turbine à gaz, comportant au moins une matrice dotée
d'une première chambre périphérique (10) dans laquelle au moins un corps d'impulsion (11) comportant un jeu de déplacement est disposé,
d'au moins une deuxième chambre périphérique (20) dont le centre de volume est décalé par rapport à un centre de volume de la première chambre périphérique (10) suivant un premier axe de matrice (A) et dans laquelle au moins un corps d'impulsion (21) comportant un jeu de déplacement est disposé, et
d'au moins une troisième chambre périphérique (30) dont le centre de volume est décalé par rapport au centre de volume de la première chambre périphérique (10) suivant un second axe de matrice (B) transversalement au premier axe de matrice (A) et dans laquelle au moins un corps d'impulsion (31) comportant un jeu de déplacement est disposé,
le premier axe de matrice (A) formant un angle d'au moins 60° et d'au plus 120° avec un axe de rotation (R) du turbocompresseur, au moins 75 % des chambres périphériques étant disposées dans une moitié côté aspiration de la pale ou au moins 75 % des chambres périphériques étant disposées dans une moitié côté refoulement de la pale, et **caractérisée en ce qu'**au moins un corps d'impulsion présente une masse d'au moins 0,01 g et/ou d'au plus 0,075 g et/ou **en ce que** le jeu de déplacement dans au moins une chambre périphérique dans au moins une direction est d'au moins 10 µm et/ou d'au plus 1,5 mm.

2. Pale selon la revendication précédente, **caractérisée en ce que** le second axe de matrice (B) forme un angle d'au moins 0° et d'au plus 30° avec l'axe de rotation (R) du turbocompresseur et/ou un angle d'au moins 30° et d'au plus 90° avec le premier axe de matrice (A).

3. Pale selon l'une des revendications précédentes, **caractérisée par** au moins une quatrième chambre périphérique (40) dont le centre de volume est espacé d'au plus 75 % d'une extension maximale de la quatrième chambre périphérique (40) d'un plan sous-tendu par les premier et second axes de matrice (A, B) et dans laquelle au moins un corps d'impulsion (41) comportant un jeu de déplacement est disposé.

4. Pale selon la revendication précédente, **caractérisée en ce qu'**une première droite de liaison du centre de volume d'au moins une quatrième chambre d'impact (40) au centre de volume d'une autre chambre périphérique (10, 20, 30, 40) forme un angle d'au plus 10° avec le premier axe de matrice (A), et **en ce qu'**une seconde droite de liaison du centre de volume de cette quatrième chambre périphérique (40) au centre de volume d'une autre chambre périphérique (10, 20, 30, 40) forme un angle d'au plus 10° avec le second axe de matrice (B).

5. Pale selon l'une des revendications précédentes, **caractérisée en ce que** les centres de volume d'au moins une paire de chambres périphériques (10, 20, 30, 40) sont espacés d'au moins 110 % et/ou d'au plus 400 % d'une extension maximale des corps d'impulsion (11, 21, 31, 41) des deux chambres périphériques.

6. Pale selon l'une des revendications précédentes, **caractérisée en ce que** la matrice est disposée sur un côté d'une bande de recouvrement (120) de la pale, lequel côté est opposé à la lame de pale.

7. Pale selon l'une des revendications précédentes, **caractérisée en ce qu'**au moins l'une des chambres périphériques est réalisée dans un corps de base (110) de la pale comportant une lame de pale (100) ou reliée à celle-ci.

8. Pale selon l'une des revendications précédentes, **caractérisée en ce qu'**au moins l'une des chambres périphériques est réalisée dans un boîtier (200) relié, en particulier par adhérence, à un corps de base (110) de la pale comportant une lame de pale (100) ou reliée à celle-ci.

9. Pale selon l'une des revendications précédentes, **caractérisée en ce qu'**au moins l'une des chambres périphériques est fermée par un couvercle (300), en particulier relié par adhérence.

10. Étage de compresseur ou de turbine d'une turbine à gaz comportant au moins une pale selon l'une des revendications précédentes.

11. Turbomachine, en particulier turbine à gaz, comportant au moins une pale selon l'une des revendications précédentes.

12. Procédé de fabrication d'une pale selon l'une des revendications précédentes, comprenant les étapes : de réalisation des chambres périphériques (10, 20, 30, 40), d'insertion des corps d'impulsion (11, 21, 31, 41), et de fermeture des chambres périphériques (10, 20, 30, 40).
